(19) Europäisches Patentamt
European Patent Office
Office européen des brevets

(11) Veröffentlichungsnummer: **0 100 956**
**B1**

(12) # EUROPÄISCHE PATENTSCHRIFT

(45) Veröffentlichungstag der Patentschrift: **19.02.86**

(51) Int. Cl.⁴: **C 01 C 3/00**

(21) Anmeldenummer: **83107311.9**

(22) Anmeldetag: **26.07.83**

(54) **Verfahren zur Herstellung von Dicyan.**

(30) Priorität: **06.08.82 DE 3229415**

(43) Veröffentlichungstag der Anmeldung: **22.02.84 Patentblatt 84/8**

(45) Bekanntmachung des Hinweises auf die Patenterteilung: **19.02.86 Patentblatt 86/8**

(84) Benannte Vertragsstaaten: **CH DE FR GB LI**

(56) Entgegenhaltungen:
**DE - A - 3 018 821**
**FR - A - 1 318 498**
**FR - A - 1 556 812**

**CHEMICAL ABSTRACTS, Band 91, Nr. 9, 27. August 1979, Seite 593, Nr. 74547j, Columbus, Ohio, USA L.A. LAZUKINA et al.: "Reactions of trimethylsilyl cyanide with halogens and N-halogen-compounds"**

**Die Akte enthält technische Angaben, die nach dem Eingang der Anmeldung eingereicht wurden und die nicht in dieser Patentschrift enthalten sind.**

(73) Patentinhaber: **BAYER AG, Konzernverwaltung RP Patentabteilung, D-5090 Leverkusen 1 Bayerwerk (DE)**

(72) Erfinder: **Fauss, Rudolf, Dr., Gerstenkamp 10, D-5000 Köln 80 (DE)**
Erfinder: **Linker, Karl-Heinz, Albert-Schweitzer-Strasse 3, D-5090 Leverkusen (DE)**
Erfinder: **Findeisen, Kurt, Dr., In der Follmühle 10, D-5068 Odenthal (DE)**

EP 0 100 956 B1

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die Erfindung betrifft ein Verfahren zur Herstellung von Dicyan durch Umsetzung von Trimethylsilylcyanid mit Halogencyan in Gegenwart von Lewis-Säuren.

Dicyan ist an sich bekannt und kann beispielsweise durch thermische Spaltung von Metallcyaniden, beispielsweise von Kupfercyanid, oder durch Oxidation von Blausäure in der Gasphase hergestellt werden [Chem. Rev. *59* (1959)]. Im allgemeinen werden die Umsetzungen bei hohen Temperaturen durchgeführt und/oder es fallen unerwünschte Nebenprodukte an.

Es wurde ein Verfahren zur Herstellung von Dicyan gefunden, das dadurch gekennzeichnet ist, dass man Trimethylsilylcyanid in Gegenwart von Lewis-Säuren mit Halogencyanen im Temperaturbereich von −20 bis 200° C umsetzt.

Aus Chemical Abstracts, Band 91, Nr. 9, 27.08.79, S. 593, Nr. 74457(j) und Ukr. Khim. Zh. 1979, 45(5), 471-473 ist bereits ein Verfahren zur Herstellung von Trimethylsilylhalogenid durch Umsetzung von Trimethylsilylcyanid mit Halogencyanen bekannt. Bei dieser Umsetzung wird auch Dicyan erhalten.

Das erfindungsgemässe Verfahren kann durch die folgende Reaktionsgleichung erläutert werden:

$$(CH_3)_3SiCN + ClCN \xrightarrow{\text{Lewis-Säure}} (CH_3)_3SiCl + (CN)_2$$

Trimethylsilylcyanid ist an sich bekannt und kann beispielsweise durch Umsetzung von Natriumcyanid mit Trimethylsilylchlorid hergestellt werden (DE-A-3018821).

Halogencyane sind erfindungsgemäss Chlorcyan, Bromcyan und Jodcyan.

Die Halogencyane sind an sich bekannt und können beispielsweise durch Halogenierung von wässrigen Alkalicyaniden und nachfolgender Trocknung hergestellt werden (Ullmann, Encyklopädie der technischen Chemie 4. Auflage, Band 9, S. 669).

In einer besonderen erfindungsgemässen Ausführungsform erfolgt die Herstellung der Halogencyane durch Umsetzung von Trimethylsilylcyanid mit Halogenierungsmitteln im Temperaturbereich von −20 bis 200°C. Halogenierungsmittel sind beispielsweise die elementaren Halogene wie Chlor, Brom und Jod, gemischte Halogene wie Chlorbrom, Bromjod und Chlorjod, und andere Halogenierungsmittel wie Sulfurylchlorid, Sulfurylbromid, Phosphorpentachlorid und Phosphorpentabromid.

In einer besonders bevorzugten Ausführungsform des erfindungsgemässen Verfahrens erfolgt die Herstellung des Halogencyans in situ. Erfindungsgemäss setzt man dann einen Überschuss Trimethylsilylcyanid mit einem der genannten Halogenierungsmittel in Gegenwart einer Lewis-Säure um.

Die besondere Ausführungsform des erfindungsgemässen Verfahrens kann durch die folgende Reaktionsgleichung erläutert werden:

$$(CH_3)_3SiCN + Cl_2 \xrightarrow{\text{Lewis-Säure}} 2\,(CH_3)_3SiCl + (CN)_2$$

Lewis-Säuren für das erfindungsgemässe Verfahren enthalten keinen aciden Wasserstoff. Sie sind beispielsweise im Organikum, Org. Chem. Grundpraktikum, 13. Auflage, 1974 S. 347, Deutscher Verlag der Wissenschaften beschrieben. Beispielsweise seien für das erfindungsgemässe Verfahren die folgenden Lewis-Säuren genannt: Aluminiumtrichlorid, Zinndichlorid, Eisentrichlorid, Zinkchlorid, Zinntetrachlorid, Antimonpentachlorid, Titantetrachlorid und Bortrifluorid. Besonders bevorzugte Lewis-Säuren sind Aluminiumtrichlorid, Eisentrichlorid und/oder Zinntetrachlorid. Selbstverständlich können auch beliebige Mischungen der Lewis-Säuren eingesetzt werden.

Das erfindungsgemässe Verfahren wird im Temperaturbereich von −20 bis 200° C, bevorzugt 0 bis 150° C durchgeführt.

Das erfindungsgemässe Verfahren wird im allgemeinen bei Normaldruck durchgeführt. Es ist jedoch auch möglich, das erfindungsgemässe Verfahren bei einem Unter- oder Überdruck beispielsweise im Druckbereich von 0,5 bis 10 bar, durchzuführen.

Bei der erfindungsgemässen Umsetzung von Trimethylsilylcyanid mit Halogencyanen setzt man im allgemeinen 0,8 bis 2 Mol, bevorzugt 1,1 bis 0,95 Mol, Trimethylsilylcyanid, bezogen auf 1 Mol Halogencyan, ein.

Bei der erfindungsgemässen Umsetzung von Trimethylsilylcyanid mit Halogenierungsmitteln setzt man im allgemeinen 1,5 bis 3 Mol, bevorzugt 1,9 bis 2,1 Mol, Trimethylsilylcyanid, bezogen auf 1 Mol des Halogenierungsmittels, ein.

Die Lewis-Säure wird in der Regel in einer Menge von 0,01 bis 5 Gew.-Teilen, bevorzugt 0,1 bis 1 Gew.-Teilen, bezogen auf 100 Gew.-Teile Trimethylsilylcyanid eingesetzt.

Das erfindungsgemässe Verfahren wird in der Regel ohne Lösungsmittel durchgeführt, so dass hohe Raum/Zeit-Ausbeuten erreicht werden. Es ist jedoch auch möglich, das erfindungsgemässe Verfahren in Gegenwart von Lösungsmitteln durchzuführen, die gegenüber den Einsatz- und Endprodukten inert sind. Als Lösungsmittel seien beispielsweise genannt: Toluol, Xylol, Chlorbenzol, o-Dichlorbenzol, n-Hexan, Cyclohexan oder Sulfolan. Selbstverständlich können auch beliebige Mischungen der Lösungsmittel eingesetzt werden.

Das erfindungsgemässe Verfahren kann beispielsweise wie folgt durchgeführt werden:

Trimethylsilylcyanid und die Lewis-Säure werden vorgelegt und beginnend bei Raumtemperatur ein Halogencyan zugetropft. Die Reaktionslösung erwärmt sich bis zum Siedepunkt und wird dort gehalten. Dicyan geht gasförmig ab und wird in einer Vorlage kondensiert. Es ist möglich, das so

erhaltene Dicyan weiter durch Destillation zu reinigen.

Bei der besonders bevorzugten Ausführungsform des erfindungsgemässen Verfahrens, der Umsetzung von Trimethylsilylcyanid mit einem Halogenierungsmittel, führt man das erfindungsgemässe Verfahren im allgemeinen wie folgt durch:

Trimethylsilylcyanid und die Lewis-Säure werden vorgelegt und beginnend mit Raumtemperatur das Halogenierungsmittel zugegeben. Die Reaktionslösung erwärmt sich bis zum Siedepunkt und wird dort gehalten. Dicyan geht gasförmig über und wird in einer Vorlage kondensiert. Selbstverständlich kann auch hier das Dicyan gegebenenfalls noch durch Destillation gereinigt werden.

Das nach dem erfindungsgemässen Verfahren anfallende Trimethylsilylhalogenid kann in an sich bekannter Weise wieder in das Trimethylsilylcyanid überführt (DE-A-3018821) und dann wieder in das erfindungsgemässe Verfahren eingesetzt werden.

Das erfindungsgemässe Verfahren kann diskontinuierlich oder kontinuierlich durchgeführt werden.

Es war nicht zu erwarten, dass das erfindungsgemässe Verfahren im erfindungsgemässen Temperaturbereich abläuft, da bei den bekannten Dicyansynthesen Reaktionstemperaturen von über 200°C erforderlich sind [Chem. Rev. *59* (1959)].

Demgegenüber wird das erfindungsgemässe Verfahren bei wesentlich niedrigeren Temperaturen durchgeführt.

Vorteilhaft für das erfindungsgemässe Verfahren ist, dass wesentlich weniger unerwünschte Nebenprodukte entstehen. Das erfindungsgemässe Verfahren ist daher für die Herstellung von Dicyan besonders geeignet.

Dicyan ist ein wichtiges Zwischenprodukt für organische Synthesen [Chemiker-Zeitung *96* (7), 388 (1972)]. So kann man beispielsweise durch Umsetzung von Dicyan mit sek. Aminen N,N-Dialkylcyanoformamidin herstellen [J. Org. Chem. *14*, 555 (1949)].

*Beispiel 1:*

In 396 g (4 Mol) Trimethylsilylcyanid und 1 g $AlCl_3$ wurden 204 ml (4 Mol) Chlorcyan eingetropft. Die Reaktion ist exotherm, gegen Ende wird noch 10 min am Rückfluss gehalten. Über den auf −15°C gehaltenen Kühler ging Dicyan ab und wurde in eine Vorlage einkondensiert. Eine anschliessende Destillation über eine 30 cm Füllkörperkolonne lieferte 140 g Dicyan (Kp. −20°C), welches zur Identifikation nach H.M. Woodborn et al., J. Org. Chem. *14*, 555 (1949) mit Diethylamin zu N,N-Diethylcyanoformamidin umgesetzt wurde.

*Beispiel 2:*

Es wurde vorgegangen wie in Beispiel 1, jedoch wurde anstelle des $AlCl_3$ 3 g $FeCl_3$ eingesetzt. Die Reaktion verlief analog, nur die Reaktionszeit musste deutlich verlängert werden.

*Beispiel 3:*

297 g (3 Mol) Trimethylsilylcyanid und 2 g $AlCl_3$ wurden auf 60°C erhitzt und dann langsam 106,5 g (1,5 Mol) Chlor eingeleitet. Dicyan entwich über einen auf −15°C temperierten Kühler und wurde in eine Vorlage kondensiert. Gegen Ende wurde noch weitere 10 min am Rückfluss erhitzt. Aus dem Sumpf wurden 299 g Trimethylsilylchlorid abdestilliert. Das rohe Dicyan wurde über eine 30 cm Füllkörperkolonne destilliert. Ausbeute: 50 g Dicyan.

## Patentansprüche

1. Verfahren zur Herstellung von Dicyan durch Umsetzung von Trimethylsilylcyanid mit Halogencyanen, dadurch gekennzeichnet, dass man die Reaktion in Gegenwart von Lewis-Säure im Temperaturbereich von −20 bis 200°C durchführt.

2. Verfahren nach Anspruch 1, dadurch gekennzeichnet, dass das Halogencyan in situ durch Reaktion des Trimethylsilylcyanids mit Halogenierungsmitteln hergestellt wird.

3. Verfahren nach Anspruch 2, dadurch gekennzeichnet, dass man Trimethylsilylcyanid mit einem Halogenierungsmittel in Gegenwart von Lewis-Säuren umsetzt.

4. Verfahren nach den Ansprüchen 1 bis 3, dadurch gekennzeichnet, dass man 0,8 bis 2 Mol Trimethylsilylcyanid, bezogen auf 1 Mol Halogencyan, einsetzt.

5. Verfahren nach den Ansprüchen 1 bis 4, dadurch gekennzeichnet, dass man als Lewis-Säuren Aluminiumtrichlorid, Eisentrichlorid und/oder Zinntetrachlorid einsetzt.

## Claims

1. Process for the preparation of dicyanogen by reacting trimethylsilyl cyanide with cyanogen halides, characterised in that the reaction is carried out in the presence of Lewis acid in a temperature range of −20 to 200°C.

2. Process according to Claim 1, characterised in that the cyanogen halide is prepared in situ by reacting the trimethylsilyl cyanide with halogenating agents.

3. Process according to Claim 2, characterised in that trimethylsilyl cyanide is reacted with a halogenating agent in the presence of Lewis acids.

4. Process according to Claims 1 to 3, characterised in that 0.8 to 2 mols of trimethylsilyl cyanide, based on 1 mol of cyanogen halide, are used.

5. Process according to Claims 1 to 4, characterised in that aluminium trichloride, iron trichloride and/or tin tetrachloride are used as the Lewis acids.

## Revendications

1. Procédé pour la fabrication de cyanogène par réaction de cyanure de triméthylsilyle avec les halogénures de cyanogène, caractérisé en ce que l'on met en œuvre la réaction dans un domaine de températures de −20 à 200° C en présence d'acides de Lewis.

2. Procédé selon la revendication 1, caractérisé en ce que l'halogénure de cyanogène est fabriqué in situ par réaction du cyanure de triméthylsilyle avec des agents halogénants.

3. Procédé selon la revendication 2, caractérisé en ce que l'on fait réagir le cyanure de triméthylsilyle avec un agent halogénant en présence d'acides de Lewis.

4. Procédé selon les revendications 1 à 3, caractérisé en ce que l'on utilise 0,8 à 2 mol de cyanure de triméthylsilyle par mole d'halogénure de cyanogène.

5. Procédé selon les revendications 1 à 4, caractérisé en ce que l'on utilise comme acides de Lewis le trichlorure d'aluminium, le trichlorure de fer et/ou le tétrachlorure d'étain.